# EUROPEAN PATENT SPECIFICATION

(11) **EP 2 712 041 B1**
(45) Date of publication and mention of the grant of the patent: **29.03.2017**
(21) Application number: 13183755.1
(22) Date of filing: 10.09.2013
(51) Int. Cl.: H02G 3/00, H02G 3/12

(54) **Device for installing junction and/or wallplate boxes for electrical systems and relative method of installation**
Vorrichtung zum Einbau von Abzweig- und/oder Wandplattenkästen für elektrische System und zugehöriges Verfahren zum Einbau
Dispositif d'installation de jonction et/ou de boîtes de plaque murale pour systèmes électriques et procédé d'installation associé

(30) Priority: 19.09.2012 IT MI20121561
(43) Date of publication of application: 26.03.2014
(73) Proprietor: Vimar SpA, 36063 Marostica, (Vicenza) (IT)
(72) Inventor: Gusi, Piero Camillo, 36063 Marostica (Vicenza) (IT)
(74) Representative: Petruzziello, Aldo

(56) References cited:
- DE-U1- 29 717 028
- US-A1- 2009 249 706
- US-A1- 2009 277 029
- US-A1- 2010 170 711

## Description

The object of the present invention is a device for installing junction and/or wallplate boxes for electrical systems and the relative method of installation.

More particularly the present invention relates to a device or accessory for installing junction and/or wallplate boxes for electrical systems and the relative method of installation on panels intended for the formation of lightweight walls.

As is known, the electrical systems in buildings for civil and/or industrial use are made by connecting one to the other the electrical connection or junction boxes using protection ducts, typically of the corrugated type or also plain and made in plastic material, inside of which the electrical wires are made to pass, suitable for connecting the components contained in the electrical boxes with the system of electrical power supply necessary for supplying the user appliances (lamps, sockets, etc.).

The aforementioned boxes can be suitable for the simple connection of the electrical wires or can be used as control unit boxes (type IP40) or, again, as wallplate boxes for multi-module supports of different type such as, for example, switches, electrical sockets, sensors and the like.

The device/accessory of the invention is particularly suitable for facilitating the installation of junction and/or wallplate boxes with respect to lightweight walls, of the panels in plasterboard, wood, plastic laminate type and the like which currently are increasingly frequently used.

These lightweight walls are typically defined by two panels placed parallel one to the other, mounted on a metal framework and such as to define an interposed gap inside whereof insulating material is placed or pipes and/or electrical wires are made to pass. Typically, in the specific case of walls in plasterboard, the junction boxes are attached to said walls and subsequently connected one to the other by means of corrugated or plain ducts; the boxes are attached to the panel which is appropriately cut as a function of the dimensional features of the box.

For this purpose metal templates can be used, optionally provided with a level, by means of which the outlines of the junction boxes are traced.

Subsequently the panel is cut and the junction box positioned by means of adhesive and subsequently attached by means of appropriate screws.

Such a solution entails some disadvantages linked to the fact that it requires the use of boxes made ad hoc, for example, provided with side fins which allow the correct positioning and levelling thereof with respect to the opening made in the panel.

Other solutions create the securing of the junction boxes to the structure of the framework of the panels by means of brackets or similar anchorage systems.

A solution of this type, however, while allowing the use of traditional junction boxes, entails some important disadvantages linked to the need to operate on the metal framework by means of cuts and/or holes necessary for the securing of said anchorage systems whereto the junction boxes have subsequently to be attached.

Other solutions use junction boxes provided with appropriate centring holes formed on the base of the same boxes and suitable for allowing the operator to mark on the panel the points at which to form the opening; once the aforementioned opening has been obtained (typically by means of a hollow cutter) the box is secured by means of appropriate metal fins with which the same box is provided.

Such a solution, however, although facilitating the process of installation, is not free from major disadvantages, in that it needs the use of boxes appropriately studied and designed for the installation technique described.

US 2009/249706A1 discloses a device, according to the preamble of the attached independent claim 1, for mounting an electric light fixture in a wall.

The object of the present invention is that of avoiding the disadvantages mentioned above.

More particularly the object of the present invention is that of providing a device (accessory) for the installation of junction and/or wallplate boxes for electrical systems suitable for allowing a fast and easy installation of said junction and/or wallplate boxes on lightweight walls.

More particularly the object of the present invention is that of providing a device suitable for allowing the installation of junction and/or wallplate boxes of traditional type.

A further object of the present invention is that of providing a device suitable for allowing an easy installation of a plurality or a battery of junction and/or wallplate boxes.

An additional object of the present invention is that of making available to users a device for the installation of junction and/or wallplate boxes suitable for ensuring a high level of resistance and reliability in time and moreover such as to be able to be easily and economically produced.

Last but not least the object of the present invention is that of allowing an increase in the depth of the box, also exploiting the thickness of the panel whereon it is installed.

These and other objects are achieved by the device for the mounting of junction and/or wallplate boxes of the present invention which has the features of the independent claim 1.

According to the invention a device is provided, defined by a plate-shaped element or flange centrally provided with a through opening with geometry substantially corresponding to that of the junction and/or wallplate boxes and suitable for allowing a coupling with the same box, the device comprising removable means suitable for defining a centring template and possible means for a modular connection of said junction and/or wallplate boxes.

Advantageous embodiments of the invention are disclosed by the dependent claims. The constructional and functional features of the device for the installation of junction and/or wallplate boxes of the present invention will be made clearer by the following detailed description in which reference is made to the accompanying drawings which represent a preferred and non-limiting embodiment thereof and in which:
Figure 1 shows schematically a front view of the device for the installation of junction and/or wallplate boxes of the present invention according to an embodiment;
Figure 2 shows schematically a front view of the device for the installation of junction and/or wallplate boxes of the present invention according to a further embodiment;
Figures 3 to 8 show schematically a sequence of steps of the method of use of the device of the invention;
Figure 9 shows schematically an axonometric view from the back of a blown-up illustration showing the applicative solution of a plurality of junction and/or wallplate boxes secured to a thin wall using the device of the invention.

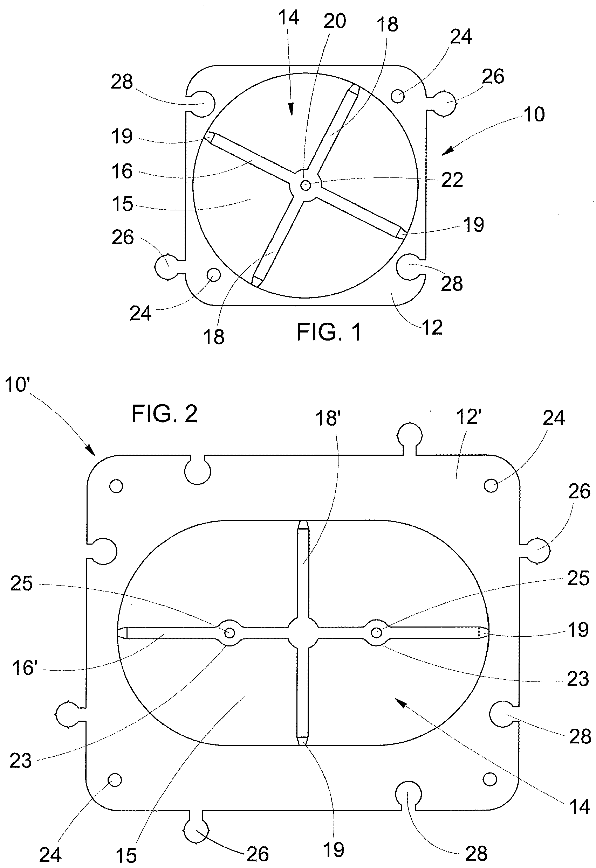

Referring to the aforementioned drawings, the device for the installation of junction and/or wallplate boxes on a lightweight wall of the present invention, denoted overall by 10 and 10' in Figures 1 and 2, is defined by a plate-shaped element or flange 12, 12' with a preferably quadrangular shape and made in plastic material (typically self-extinguishing engineering polymer or another suitable material and complying with industry standards) provided centrally with a through opening 14 of circular, rectangular or rectangular with the smaller sides arched shape or with another geometry corresponding to that of the junction and/or wallplate boxes commonly available on the market (round boxes, wallplate boxes with 3 modules or 4 modules or higher, control unit boxes and the like); the device 10 according to the embodiment of Figure 1, for example, is particularly suitable for the application of round boxes, while the device 10' of Figure 2 is particularly suitable for the assembly of boxes with a substantially rectangular section with the smaller sides arched.

The through opening 14 is provided with at least one thin rib developed along one of the median axes of the through opening 14, with said rib comprising at least one hole made at the centre of the same through opening.

Referring in particular to Figures 1 and 2, the through opening 14 is provided with a first thin rib 16, 16' and a second thin rib 18, 18' placed substantially perpendicular one to the other, preferably at the median axes of the same through opening 14 so as to divide said through opening into sectors 15 for the function which will be described in detail herein below.

Referring in particular to Figure 1, the first rib 16 and the second rib 18 have, at their intersection point, an expansion 20 provided with a hole 22.

Referring to Figure 2, the first rib 16' has at least two further expansions 23 substantially symmetrical one to the other with respect to the centre of the through opening 14 and each one provided with a hole 25.

The plate-shaped element or flange 12-12' has, at two at least opposite vertices, through holes 24.

Starting from each outer side edge of the plate-shaped element 12-12', at least one shaped appendage 26 develops, away from said edge.

In a similar way, at each side edge of the plate-shaped element 12-12' at least one shaped opening 28 is formed, extending in the direction of the through opening 14, whose dimensional features are corresponding to those of the shaped appendage 26.

The function of said shaped appendage 26 and shaped opening 28 will be detailed herein below.

The first rib 16-16' and the second rib 18-18', at their ends of contact with the profile or edge of the opening 14, have a portion 19 with smaller section with respect to the section of the aforementioned ribs for the function to be mentioned herein below.

The method of use of the device/accessory for the installation of junction and/or wallplate boxes of the present invention is explained herein below.

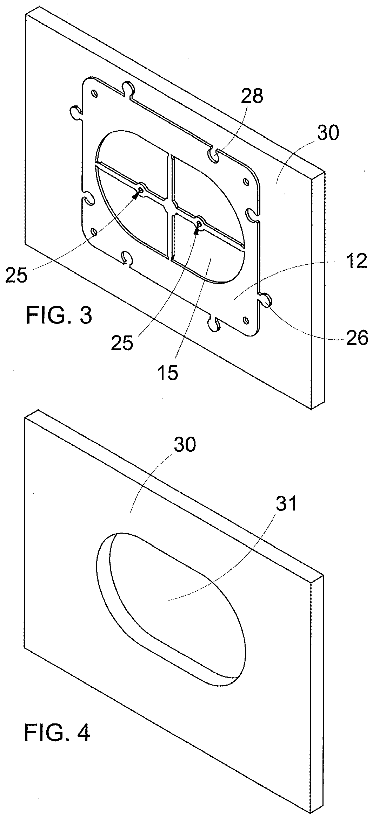

The steps of the method are represented in Figures 3 to 8 with reference to the device 10' of Figure 2; the intent is anyway that these steps be the same for the device 10 configured according to the embodiment of Figure 1 or according to other forms suitable for the purpose.

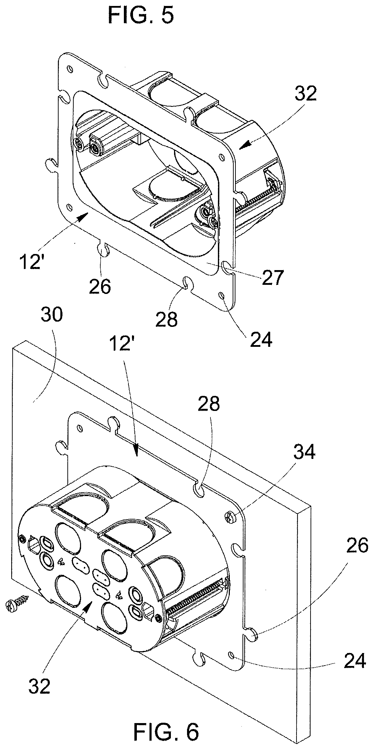

Initially the installer positions the device of the invention with a surface of the plate-shaped element or flange 12' in contact with the rear surface of a panel 30 of the lightweight wall with respect to which a junction and/or wallplate box 32 (Figure 6) has to be installed.

Subsequently, by means of a pencil or of an equivalently known marking means, the installer marks on the panel 30 two points corresponding to the holes 25 of the first rib 16' (as schematised by the arrows in Figure 3); optionally the installer may also draw the profile of the sectors 15 of the through opening 14 and, consequently, mark on the panel 30 the profile of an opening 31 to be formed in the same.

The plate-shaped element or flange 12' is, in this initial phase, used as a template. At this point the installer removes the plate-shaped element or flange and, by means of a hollow cutter, makes two circular holes in the panel 30; the marks corresponding to the holes 25 of the first rib 16' of the plate-shaped element or flange 12' allow the definition of the centres whereon to operate with said cutter; the remaining part of panel, in order to obtain an opening 31, is removed, for example, with a shearer or similar device.

In a subsequent phase the installer removes from the plate-shaped element or flange 12' the first rib 16' and the second rib 18'; this operation is facilitated by the presence of the portions 19 with reduced section of the same ribs.

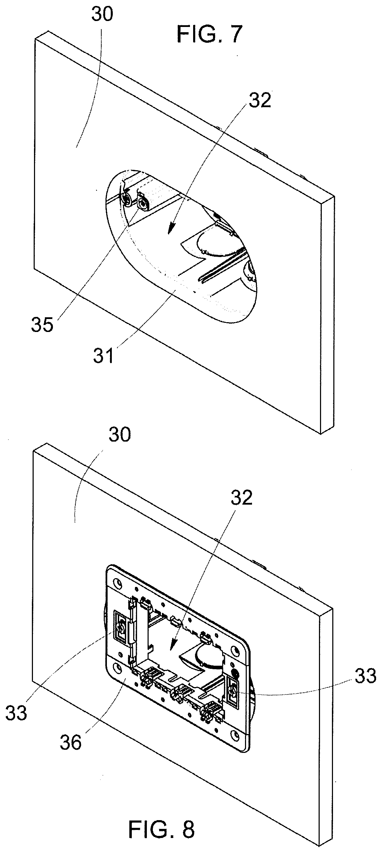

The plate-shaped element is subsequently coupled to the junction and/or wallplate box 32 (the box is inserted in the through opening 14 with its edge or perimeter lip 27 externally projecting in contact with the surface of the flange in contact with the panel 30 or attached to the same flange at the same through opening on the opposite side with respect to that of contact with the panel and attached to the flange by means of adhesive or other known retaining means suitable for the purpose and conforming to standards) and the assembly obtained in this way is attached to the panel 30 by means of screws 34 inserted in the through holes 24 of the plate-shaped element or flange, as schematised in Figure 6 in a view from the back and in Figure 7 in a front view.

To the junction and/or wallplate box 32 of the invention restrained in this way to the panel 30 a wallplate support 36 is attached which is placed on the front side of the panel 30 on the side opposite to that of securing of the box and plate-shaped element or flange assembly, as schematised in Figure 8. Said wallplate support 36 is restrained to the junction and/or wallplate box 32 by means of fastening screws 33 which engage with corresponding holes 35 formed in said box (Figures 7 and 8), exerting a traction on the same so as to block it integrally against the panel 30.

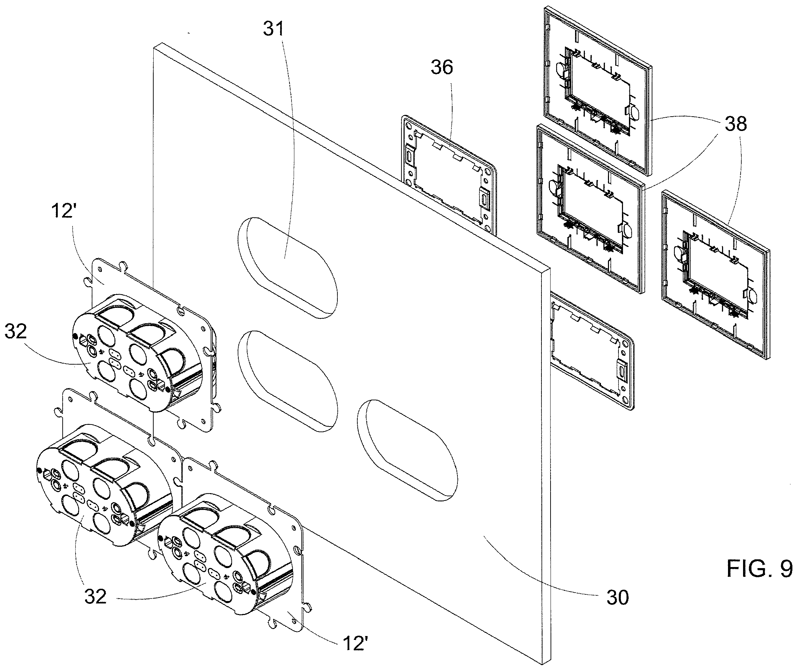

At this point the installer can proceed with insertion of the wallplates (not shown in the drawings) in the wallplate support 36 and with the covering of the same by means of a covering plate 38 made in different shapes, materials and colours according to the different aesthetic and/or use specifications, as schematically shown in Figure 9 in a view from the back.

The particular configuration of the plate-shaped element or flange provided with the shaped appendages 26 and the corresponding shaped openings 28 allows the installer to couple several flanges (not necessarily of the same size) one to the other like the pieces of a jigsaw puzzle, inserting the shaped appendages 26 in the corresponding shaped openings 28 and, consequently, setting up batteries of junction and/or wallplate boxes 32 connected electrically by means of wires housed inside a corrugated duct (not shown in the drawings), as shown in Figure 9; in this way the arrangement in battery of the junction and/or wallplate boxes is found to be facilitated and eased.

As can be seen from the foregoing, the advantages achieved by the device of the invention are clear.

The device for the assembly of junction and/or wallplate boxes for electrical systems of the present invention allows, advantageously, to ease the process of installation thanks to the presence of the plate-shaped element or flange used, in an initial phase, as drilling template.

Additionally advantageous is the fact that the device of the invention does not require necessarily the use of junction and/or wallplate boxes made ad hoc, but allows the use of boxes commonly available on the market; in fact the geometric features of the through opening of the plate-shaped element or flange for the housing of the junction and/or wallplate box, just like the dimensions of said flange, can be varied as a function of the specific geometric features of the junction and/or wallplate box.

A further advantage is represented by the fact that the device of the invention allows the box to be rested on the rear surface of the panel of the lightweight wall allowing, in this way, useful installation volume to be gained, increasing the effective depth of the box in that the thickness of the panel is also exploited (see in particular Figure 7).

A further advantage is represented by the fact that the device of the invention allows a "cleaner" installation, taking account of the fact that the supports (for example the wallplate support) are perfectly rested on the wall; as a consequence of this subsequent operations of plastering are not necessary which entail a prolonging of the times and an increase in costs.

Additionally advantageous is the fact that the device of the invention, with the plate-shaped element or flange configured as described above, allows a modular structure to be formed and to mount, in a fast and easy way, a battery of junction and/or wallplate boxes also dimensionally different one from the other.

Although the invention has been described above with particular reference to its methods of manufacture, given solely by way of a non-limiting example, numerous modifications and changes will be apparent to a person skilled in the art in light of the above description. The present invention, therefore, intends to embrace all the changes and variants falling within the scope of the following claims.

## Claims

1. Mounting flange (10, 10') for the installation of junction and/or wallplate boxes (32) for electrical systems, especially suitable for installation on panels intended for the formation of lightweight walls of the plasterboard, wood or plastic laminate type, comprising a plate-shaped element or flange (12, 12') provided with a central through opening (14) with geometry substantially corresponding to that of the junction or wallplate boxes and with coupling means to be coupled to the same box, **characterised in that** the device further comprises removable means defining a centring template.

2. Mounting flange (10, 10') for assembly according to claim 1, **characterised in that** the means defining a centring template comprise at least one thin rib (16, 16') placed in said through opening (14) at its median axes, said rib being provided with at least one hole (22, 25).

3. Mounting flange (10, 10') according to claim 1 or 2, **characterised in that** it comprises a first thin rib (16, 16') and a second thin rib (18, 18') placed substantially perpendicular one to the other at the median axes of the through opening (14) dividing the same into sectors (15).

4. Mounting flange (10) according to any one of the preceding claims, **characterised in that** the first rib (16) and the second rib (18) have, at their intersection point, an expansion (20) provided with a hole (22).

5. Mounting flange (10') according to any one of claims 1-3, **characterised in that** the first rib (16') has at least two further expansions (23) substantially symmetrical one to the other with respect to the centre of the through opening (14), each one provided with a hole (25).

6. Mounting flange (10, 10') according to one or more of the preceding claims, **characterised in that** the first rib (16, 16') and the second rib (18, 18'), at their ends of contact with the profile or edge of the through opening (14), have a portion (19) with smaller section with respect to the section of the same ribs.

7. Mounting flange (10, 10') according to any one of the preceding claims, **characterised in that** it comprises means for a modular connection of the junction and/or wallplate boxes (32) defined by at least one shaped appendage (26) developed starting from each outer side edge of the plate-shaped element (12, 12') and away from said edge and at least one shaped opening (28) with dimensional features corresponding to those of the at least one shaped appendage (26) and formed at each side edge of the plate-shaped element (12, 12') extending in the direction of the through opening (14).

8. A method for installing junction and/or wallplate boxes with the mounting flange (10, 10') in accordance with the preceding claims, **characterised in that** it comprises the steps of:
- positioning the plate-shaped element or flange (12, 12') with a surface in contact with the rear surface of a panel (30) of a lightweight wall with respect to which the junction and/or wallplate box (32) has to be installed;
- using said plate-shaped element or flange as centring template, marking at least one point corresponding to the at least one hole of the at least one rib of said plate-shaped element or flange;
- removing the plate-shaped element or flange and, by means of a hollow cutter, forming at least one circular hole in the panel (30);
- coupling the plate-shaped element or flange to the junction and/or mounting box (32), after having removed the at least one rib and attaching the assembly thus obtained to the panel (30) by means of screws (34) inserted in through holes (24) of said plate-shaped element or flange;
- attaching an optional wallplate support (36) on the front side of the panel (30) on the side opposite to that of securing of the box and plate-shaped element or flange assembly by means of fastening screws (33) which engage with corresponding holes (35) formed in said box, exerting a traction on the same.

9. The method for installing junction and/or wallplate boxes according to claim 8, **characterised in that** several adjacent circular holes are formed with said hollow cutter and subsequently the remaining parts of panel are removed in order to obtain an opening (31) reproducing the shape of the box (32) to be installed.

10. The method for installing junction and/or wallplate boxes according to claim 8, **characterised in that** it comprises a step of modular connection of several junction and/or wallplate boxes (32) obtained by coupling the plate-shaped elements or flanges (12, 12') like the pieces of a jigsaw puzzle, inserting the shaped appendages (26) in the corresponding shaped openings (28).

## Patentansprüche

1. Befestigungsflansch (10, 10') für die Installation von Verteiler- und/oder Wandplattenkästen (32) für elektrische Systeme, die speziell für die Installation an Platten geeignet sind, die zum Bilden von Leichtbauwänden aus Gipskartonplatten, Holz- oder Kunststofflaminat beabsichtigt sind, welche ein plattenförmiges Element oder einen plattenförmigen Flansch (12, 12') umfassen, das bzw. der mit einer zentralen Durchgangsöffnung (14) mit einer Geometrie, die im Wesentlichen der der Verteiler- oder Wandplattenkästen entspricht, und mit Kopplungsmitteln, die mit dem gleichen Kasten zu koppeln sind, versehen ist, **dadurch gekennzeichnet, dass** die Vorrichtung weiter entfernbare Mittel umfasst, die eine Zentrierschablone definieren.

2. Befestigungsflansch (10, 10') zum Aufbau nach Anspruch 1, **dadurch gekennzeichnet, dass** das Mittel, das eine Zentrierschablone definiert, mindestens eine dünne Rippe (16, 16') umfasst, die in der Durchgangsöffnung (14) an deren Mittelachse angeordnet ist, wobei die Rippe mit mindestens einem Loch (22, 25) versehen ist.

3. Befestigungsflansch (10, 10') nach Anspruch 1 oder 2, **dadurch gekennzeichnet, dass** er eine erste dünne Rippe (16, 16') und eine zweite dünne Rippe (18, 18') umfasst, die im Wesentlichen senkrecht zueinander an den Mittelachsen der Durchgangsöffnung (14) angeordnet sind und diese in Sektoren (15) teilen.

4. Befestigungsflansch (10) nach einem der vorstehenden Ansprüche, **dadurch gekennzeichnet, dass** die erste Rippe (16) und die zweite Rippe (18) an ihrem Kreuzungspunkt eine Erweiterung (20) aufweisen, die mit einem Loch (22) versehen ist.

5. Befestigungsflansch (10') nach einem der Ansprüche 1 - 3, **dadurch gekennzeichnet, dass** die erste Rippe (16') mindestens zwei weitere Erweiterungen (23) aufweist, die im Wesentlichen symmetrisch zueinander in Bezug auf die Mitte der Durchgangsöffnung (14) sind und jede mit einem Loch (25) versehen ist.

6. Befestigungsflansch (10, 10') nach einem oder mehreren der vorhergehenden Ansprüche, **dadurch gekennzeichnet, dass** die erste Rippe (16, 16') und die zweite Rippe (18, 18') an ihren Kontaktenden mit dem Profil oder der Kante der Durchgangsöffnung (14) einen Abschnitt (19) mit einer kleineren Sektion in Bezug auf die Sektion der gleichen Rippen aufweisen.

7. Befestigungsflansch (10, 10') nach einem der vorstehenden Ansprüche, **dadurch gekennzeichnet, dass** er Mittel für eine modulare Verbindung der Verteiler- und/oder Wandplattenkästen (32) umfasst, die mindestens durch eine geformte Anfügung (26) definiert sind, die beginnend von jedem Rand der Außenseite des plattenförmigen Elements (12, 12') und weg von dem Rand und von mindestens einer geformten Öffnung (28) mit Dimensionsmerkmalen, die denjenigen von der mindestens einen geformten Anfügung (26) entsprechen, ausgestaltet und an jeder Seitenkante des plattenförmigen Elements (12, 12') gebildet ist, das sich in der Richtung auf die Durchgangsöffnung (14) erstreckt.

8. Verfahren zur Installation von Verteiler- und/oder Wandplattenkästen mit dem Befestigungsflansch (10, 10') nach den vorhergehenden Ansprüchen, **dadurch gekennzeichnet, dass** es die Schritte umfasst:
- Positionieren des plattenförmigen Elements oder Flansches (12, 12') mit einer Fläche, die in Kontakt mit der Rückfläche einer Platte (30) von einer Leichtbauwand ist, an der der Verteiler- und/oder Wandplattenkasten (32) zu installieren ist;
- Markieren von mindestens einem Punkt, der dem mindestens einen Loch von der mindestens einen Rippe des plattenförmigen Elements oder Flansches entspricht, unter Verwendung des plattenförmigen Elements oder Flansches als Zentrierschablone;
- Entfernen des plattenförmigen Elements oder Flansches und Bilden von mindestens einer kreisförmigen Öffnung in der Platte (30) mittels eines Hohlfräsers;
- Koppeln des plattenförmigen Elements oder Flansches mit dem Verteiler- und/oder Montagekasten (32), nach dem Entfernen der mindestens einen Rippe, und Anbringen der somit erlangten Baugruppe an der Platte (30) mittels Schrauben (34), die in Durchgangslöcher (24) des plattenförmigen Elements oder Flansches eingeführt werden;
- Anbringen eines optionalen Wandplattenträgers (36) an der Vorderseite der Platte (30) auf der Seite, die der der Befestigung des Kastens und der plattenförmigen Element- oder Flanschbaugruppe gegenüberliegt, mittels Befestigungsschrauben (33), die in entsprechende Löcher (35) eingreifen, die in dem Kasten gebildet sind, was eine Zugkraft auf diese ausübt.

9. Verfahren zur Installation von Verteiler- und/oder Wandplattenkästen nach Anspruch 8, **dadurch gekennzeichnet, dass** mehrere angrenzende kreisförmige Löcher mit dem Hohlfräser gebildet und anschließend die verbleibenden Teile der Platte entfernt werden, um eine Öffnung (31) zu erlangen, welche die Form des zu installierenden Kastens (32) reproduziert.

10. Verfahren zur Installation von Verteiler- und/oder Wandplattenkästen nach Anspruch 8, **dadurch gekennzeichnet, dass** es einen Schritt des modularen Verbindens von mehreren Verteiler- und/oder Wandplattenkästen (32) umfasst, was durch Koppeln der plattenförmigen Elemente oder Flansche (12, 12') wie die Teile eines Puzzlespiels erreicht wird, indem die geformten Anfügungen (26) in die entsprechenden geformten Öffnungen (28) eingeführt werden.

## Revendications

1. Bride de montage (10, 10') pour l'installation de boîtes de jonction et/ou de plaque murale (32) pour des systèmes électriques, convenant en particulier pour l'installation sur des panneaux prévus pour la formation de cloisons légères de type plaque de plâtre, bois ou stratifié en plastique, comprenant un élément en forme de plaque ou une bride (12, 12') doté(e) d'une ouverture traversante centrale (14) avec une géométrie correspondant sensiblement à celle des boîtes de jonction ou de plaque murale et avec des moyens d'accouplement à accoupler avec la même boîte, **caractérisée en ce que** le dispositif comprend en outre des moyens amovibles définissant un gabarit de centrage.

2. Bride de montage (10, 10') pour l'assemblage selon la revendication 1, **caractérisée en ce que** les moyens définissant un gabarit de centrage comprennent au moins une nervure mince (16, 16') placée dans ladite ouverture traversante (14) au niveau de son axe médian, ladite nervure étant dotée d'au moins un trou (22, 25).

3. Bride de montage (10, 10') selon la revendication 1 ou 2, **caractérisée en ce qu'**elle comprend une première nervure mince (16, 16') et une deuxième nervure mince (18, 18') placées sensiblement perpendiculairement l'une par rapport à l'autre au niveau de l'axe médian de l'ouverture traversante (14) en divisant cette même en secteurs (15).

4. Bride de montage (10) selon l'une quelconque des revendications précédentes, **caractérisée en ce que** la première nervure (16) et la deuxième nervure (18) possèdent, au niveau de leur point d'intersection, un élargissement (20) doté d'un trou (22).

5. Bride de montage (10') selon l'une quelconque des revendications 1 - 3, **caractérisée en ce que** la première nervure (16') a au moins deux autres élargissements (23) sensiblement symétriques l'un par rapport à l'autre compte tenu du centre de l'ouverture traversante (14), chacun étant doté d'un trou (25).

6. Bride de montage (10, 10') selon l'une ou plusieurs des revendications précédentes, **caractérisée en ce que** la première nervure (16, 16') et la deuxième nervure (18, 18') ont, au niveau de leurs extrémités de contact avec le profil ou bord de l'ouverture traversante (14), une partie (19) avec une section plus petite par rapport à la section des mêmes nervures.

7. Bride de montage (10, 10') selon l'une quelconque des revendications précédentes, **caractérisée en ce qu'**elle comprend des moyens pour un raccordement modulaire des boîtes de jonction et/ou de plaque murale (32) définis par au moins une excroissance mise en forme (26) développée en commençant à partir de chaque bord latéral extérieur de l'élément en forme de plaque (12, 12') et en éloignement dudit bord, et au moins une ouverture mise en forme (28) avec des caractéristiques dimensionnelles correspondant à celles de l'au moins une excroissance mise en forme (26) et formée sur chaque bord latéral de l'élément en forme de plaque (12, 12') en s'étendant en direction de l'ouverture traversante (14).

8. Procédé pour l'installation de boîtes de jonction et/ou de plaque murale avec la bride de montage (10, 10') selon les revendications précédentes, **caractérisé en ce qu'**il comprend les étapes suivantes :
- le positionnement de l'élément en forme de plaque ou de la bride (12, 12') avec une surface en contact avec la surface arrière d'un panneau (30) d'une cloison légère par rapport auquel la boîte de jonction et/ou de plaque murale (32) doit être installée ;
- l'utilisation dudit élément en forme de plaque ou de ladite bride en tant que gabarit de centrage, en marquant au moins un point correspondant à l'au moins un trou de l'au moins une nervure dudit élément en forme de plaque ou de ladite bride ;
- le retrait dudit élément en forme de plaque ou de ladite bride et, au moyen d'une fraise creuse, la formation d'au moins un trou circulaire dans le panneau (30) ;
- l'accouplement entre l'élément en forme de plaque ou la bride et la boîte de jonction et/ou de montage (32) après avoir enlevé l'au moins une nervure et l'attachement de l'assemblage en obtenant ainsi le panneau (30) au moyen de vis (34) insérées dans des trous traversants (24) dudit élément en forme de plaque ou de ladite bride ;
- l'attachement d'un support de plaque murale optionnel (36) sur le côté avant du panneau (30) sur le côté opposé à celui de la fixation de l'assemblage de la boîte et de l'élément en forme de plaque ou de la bride au moyen de vis de fixation (33) qui se mettent en prise avec des trous correspondants (35) formés dans ladite boîte, en exerçant une traction sur ces mêmes.

9. Procédé pour l'installation de boîtes de jonction et/ou de plaque murale selon la revendication 8, **caractérisé en ce que** plusieurs trous circulaires adjacents sont formés avec ladite fraise creuse et **en ce que** les parties résiduelles du panneau sont ensuite enlevées afin d'obtenir une ouverture (31) reproduisant la forme de la boîte (32) à installer.

10. Procédé pour l'installation de boîtes de jonction et/ou de plaque murale selon la revendication 8, **caractérisé en ce qu'**il comprend une étape de raccordement modulaire de plusieurs boîtes de jonction et/ou de plaque murale (32) obtenu en accouplant les éléments en forme de plaque ou brides (12, 12') à la manière de pièces d'un puzzle en insérant les excroissances mises en forme (26) dans les ouvertures mises en forme (28) correspondantes.
